# EUROPEAN PATENT APPLICATION

(11) **EP 1 357 651 A1**
(43) Date of publication of application: **29.10.2003**
(21) Application number: 02252828.5
(22) Date of filing: 23.04.2002
(51) Int. Cl.: H02G 1/08, G02B 6/44

(54) **Method and system of subduct installation**

(71) Applicant: BRITISH TELECOMMUNICATIONS public limited company, London EC1A 7AJ (GB)
(72) Inventor: The designation of the inventor has not yet been filed
(74) Representative: Evershed, Michael

(57) **Abstract**

A method and system of subducting installation comprises inserting subducting (1) having a variable cross-sectional area into a main duct (4), and decreasing the cross-sectional area of the subducting to reduce the volume occupied by the subducting in the main duct. Before decreasing the cross-sectional area of the subducting, the cross-sectional area of the subducting may be increased to allow components to be inserted into the subducting. Cables (10) may be inserted into the subducting (1) during the step of increasing the cross-sectional area of the ducting (1), for example, by forcing compressed gas through the subducting.

## Description

This invention relates to the installation of subducting. In particular, this invention relates to a method and system for installing subducting in a main duct into which cables may be inserted.

It is a common requirement, for example, for telecommunication companies, to install cables into long ducts which may be part of an extensive installed duct network. Many such ducts have limited space for remaining cable installation due to existing installed cables, therefore rendering the installation process difficult. Installation costs are inherently high making duct space a potentially valuable asset. This is true for both partially populated ducts and empty ducts.

A typical installation process can involve the use of compressed gas, which is forced into the duct to provide a viscous flow along the duct, which results in a distributed forward force on the cable being installed. Often this is done in a subduct within the main duct to facilitate the process. This type of process is generally used for the installation of optical fibre cables. A disadvantage of such a system is that more duct space is used than if the cables were installed directly, without the subduct, as adequate space is required for airflow around the cable to allow effective installation. This space is only required during installation or removal of the cable.

The present invention is directed to overcoming or substantially ameliorating the above problems.

According to the present invention in a first aspect there is provided a method of installing subducting into a duct, the subducting having a variable cross-sectional area, the method comprising:
inserting the subducting into the duct; and
decreasing the cross-sectional area of the subducting to reduce the volume occupied by the subducting in the duct.

Preferably, the method further comprises increasing the cross-sectional area of the subducting for receiving components into the subducting.

Preferably, the step of increasing the cross-sectional area of the subducting comprises mechanically expanding the subducting to increase the area.

Preferably, the subducting is formed of a flexible material and, in a further preferred embodiment, the step of increasing the cross-sectional area of the subducting comprises expanding the material forming the subducting.

In a preferred embodiment, the method of installing the subducting further comprises connecting the subducting to a supply of compressed gas, and activating the supply of compressed gas to force gas through the subducting to increase the cross-sectional area of the subducting whilst inserting the subducting into the duct.

The step of decreasing the cross-sectional area may comprise allowing the subducting to collapse under gravity, or deflate.

In a preferred embodiment, the step of activating the supply of compressed gas to force gas through the subducting includes turning the subducting inside out as gas is forced along the subducting. Preferably, the step of turning the subducting inside out occurs as the subducting is being inserted into the duct.

According to the present invention in a second aspect, there is provided a system for installing subducting into a duct comprising:
subducting having a variable cross-sectional area;
means for decreasing the cross-sectional area of the subducting to reduce the volume occupied by the subducting in the duct.

Preferably, the system further comprises means for increasing the cross-sectional area of the subducting for receiving components into the subducting.

Preferably, the subducting is formed of a flexible material.

Preferably, the subducting comprises a plurality of subducts, or subduct bores for receiving a plurality of components.

In a preferred embodiment, the system further comprises a supply of compressed gas connectable to the subducting for forcing gas through the subducting to increase the cross-sectional area of the subducting whilst inserting the subducting into the duct.

Preferably the supply of compressed gas is connected to the subducting such that activation of the supply of compressed gas forces gas through the subducting causing the subducting to turn inside out. Preferably, this occurs whilst the subducting is being inflated.

The invention will now be described by way of example only with reference to the accompanying drawings, in which:
Figure 1 is a cross-section of the subducting embodying the invention, as manufactured in a pre-inverted state;
Figure 2 is a cross-section of the subducting of Figure 1 being inflated within a main duct;
Figure 3 is a cross-section of the subducting of Figures 1 and 2 in an inflated state within a main duct;
Figure 4 is a cross-section of the subducting of Figures 2 and 3 installed in a main duct with one subduct in the inflated state;
Figures 5a and 5b are cross-sections of the subducting of Figures 2 to 4 in which a multiple subduct is inflated and installed in the main duct, and a plurality of subducts are shown deflated after cables have been inserted therein;
Figure 6a is a sectional view of installation equipment for installing the subducting of Figures 1 to 5 in a main duct;
Figure 6b is a perspective view of the pressurised chamber forming part of the equipment of Figure 6a; and
Figures 7a and 7b are cross-sectional views of the subducts shown in Figures 2 to 5b in a high density cable installation with multiple and single cable capacity subducts inserted in the main duct.

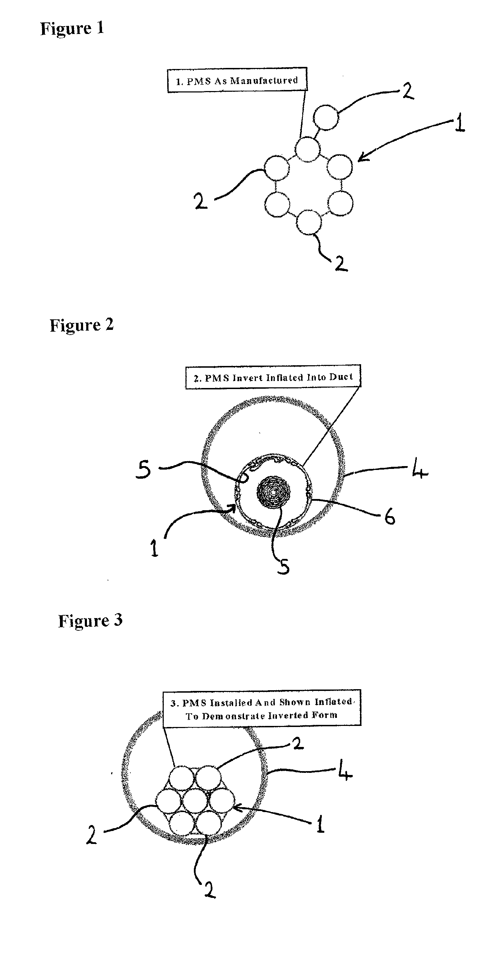

The subducting shown in Figure 1 comprises a multi-subduct 1 embodying the invention, comprising a number of subducts 2 connected together along their length. The subducts 2 are shown in an inflated state in Figure 1 and are illustrated in an inverted (that is inside-out) state with the normally inside surface forming the outer surface in this state. In this preferred embodiment, the multi-subduct is manufactured in this inverted (inside-out) state.

The multi-subduct 1 is shown in Figure 2 in an uninflated state and in the process of installation into a main duct 4. The subduct 1 in the inverted state is partially inverted into the main duct 4. As the subduct 1 is installed, it is turned inside out thereby forcing the outside surface in this state (which is the normally inside surface 5) to become the inside surface, and the normally outside surface 6 to become the outer surface. This process is described in detail below.

Figure 3 shows a multi-subduct 1 installed within a main duct 4 with the individual subducts 2 of the multi-subduct 1 inflated.

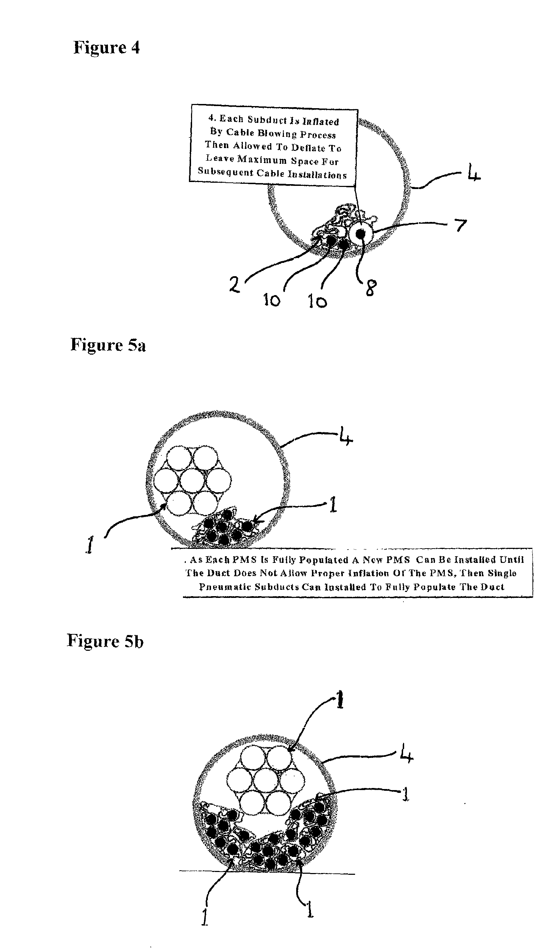

Figure 4 shows the multi-subduct 1 installed in the main duct 4 in its generally uninflated state, but with one subduct 7 inflated as the cable 8 is being installed through the centre thereof. Other cables 10 are shown installed in other subducts 2 located within the main duct 4.

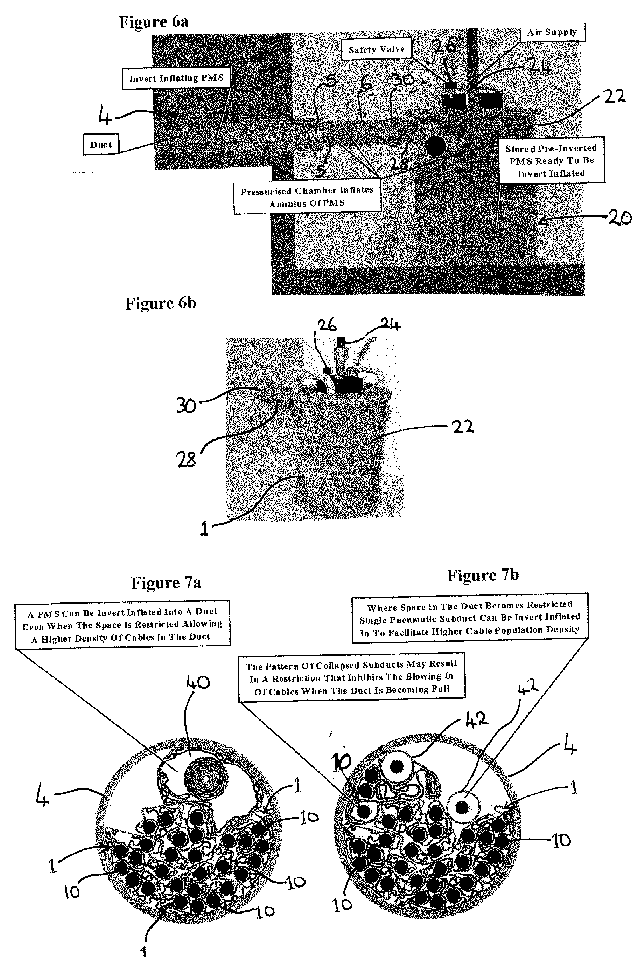

A plurality of fully populated multi-subducts 1 may be inserted into the main duct 4, as shown in Figures 5a and 5b.

The installation equipment 20 for use in the installation of the ducting embodying the invention is shown in Figures 6a and 6b. The equipment comprises a pressurised chamber 22 containing a multi-subduct 1 to be installed. The multi-subduct 1 is coiled in its inverted (inside-out) state within the pressurised chamber 22, and a gas supply 24 is connected to an inlet of the pressurised chamber 22. A safety valve 26 is also connected to the pressurised chamber 22. A delivery tube 28 is connected to an outlet of the pressurised chamber 22. A free end of the multi-subduct 1 is clamped using a clamp 30 to the free end of the delivery tube 28.

The pressure of the gas in the pressurised chamber 22 forces the multi-subduct 1 in the pressurised chamber out through the delivery tube 28 and into the main duct 4, turning it inside out in the process such that the normally inside surface 5 is the inside surface and the normally outside surface 6 forms the outer surface.

Figure 7a shows a multi-subduct 40 being inserted into a main duct 4 in which there are already installed a number of cables 10 located within installed subducts 1 which are in the uninflated state.

Figure 7b shows single subducts 42 being inserted into a main duct 4 in addition to existing multi-subducts 1 which have already been installed in the main duct 4 and are now in the uninflated state. Such a configuration is particularly advantageous in situations where there is insufficient room in the main duct 4 to accommodate multi-subducts.

The method of installing ducting according to preferred embodiments of the invention will now be described by way of example.

When manufactured, the single subduct 42 or multi-subduct 1 is produced inside out with its normally inside surface forming the outer surface. This enables the subducting to be installed by inverse inflation, which involves blowing the subduct or multi-subduct into a main duct 4 and turning it inside out in the process.

The single subduct 42 or multi-subduct 1, as manufactured, is coiled and is placed in the pressurised chamber 24, as shown in Figures 6a and 6b. One end of the subduct 42 or 1 is fed through the delivery tube 28 and is then folded back over the free end of the delivery tube and clamped thereto, using a clamp 30. Compressed gas is blown into the pressurised chamber 22 from a compressed gas supply 24 and this raises the pressure in the delivery tube 28 connected thereto, forcing the subduct or multi-subduct 1 out of the pressurised chamber 22 and down the delivery tube 28, turning it inside out in the process as it passes outside the delivery tube, as shown in Figures 2 and 7a. The subduct 42 or 1 is then fed into the main duct 4 and is forced therealong to the desired length or position, whilst continuing to be turned inside out as it moves along the main duct 4.

Removing the pressure and disconnecting the subduct 42 or 1 from the pressurised chamber 22 causes the ducting to collapse, for example, due to gravity, as shown in Figures 4, 5a, 5b, 7a and 7b. Cables 8 may then be inserted in each subduct 1 or 42 and fed along the subduct by blowing compressed gas through this subduct to inflate it and provide a viscous flow through which the cables 8 can propagate. Once the cables 8 are inserted into the subduct 1 or 42, the gas pressure is removed and the subduct 1 or 42 collapses around the cable 8 as it deflates, as shown in Figures 4, 5a, 5b, 7a and 7b.

Multi-subducts of the type illustrated, for example, in Figures 1, 3, 5a, 5b, 7a and 7b can be inserted, but if there is insufficient room in the main duct 4 to accommodate such multi-subducts, single sub-ducts 42 may be used to fill the remaining spaces, as shown in Figure 7b.

The system and method embodying the invention is particularly advantageous as it can replace traditional solid subducts used, for example, in the installation of fibre cables in cabling networks. It is also advantageous in situations where existing ducts are already installed and new subducting is required to be inserted. The fibre count within existing ducts may be increased either by replacement of the installed cable with a multi-subduct embodying the invention, or addition of subducts embodying the invention to the existing installed cable network. The bore diameter of the subduct embodying the invention may be chosen to best fit the cables to be installed. Such cables may be, for example, traditional blown cables or micro cables. A further advantage of the subducting embodying the invention over traditional subducting is the reduction in duct space used by each installed cable. Furthermore, the invention enables cable installation into heavily congested ducts resulting in a reduction in the required duct build along existing duct routes.

Thus the embodiments of the invention have considerable economical advantages and the advantage of ease of insertion.

The subducting embodying the invention may be formed of highly flexible material, preferably of composite construction and which naturally deflates due to gravity. Furthermore, the subducting embodying the invention preferably has physical properties that enable a cable to be installed into it by the application of a flow of compressed air. Such requirements may include an ability to withstand pressurisation to at least 10 bar, a natural tendency to deflate, a tendency to become rigid when pressurised, a low friction inner surface, and being resistant to wear caused by contact with cables being installed. The subducts embodying the invention may be may be termed "Pneumatic Single Subducts" (PSS) or "Pneumatic Multi-Subducts" (PMS).

Various modifications may be made to the present invention, for example, whilst the embodiments described above refer to increasing the cross-sectional area of the subduct by application of an additional flow of compressed gas, the area could be increased by the gas flow which is used for the insertion of the cable into the subduct.

Furthermore, whilst the variation of cross-sectional area of the subducting has been described as being a result of using a highly flexible material which can be inflated using compressed gas and which naturally deflates due to gravity, the increase in cross-sectional area may also be achieved by using mechanical expansion or material expansion of the subduct.

In a further embodiment (not shown), subduct connectors may be used to assist in the construction of long lengths of subducting. These connectors should be capable of withstanding the working pressure and be designed to cause minimal restriction to the subduct bore.

## Claims

1. A method of installing subducting into a duct, the subducting having a variable cross-sectional area, the method comprising:
inserting the subducting into the duct; and
decreasing the cross-sectional area of the subducting to reduce the volume occupied by the subducting in the duct.

2. A method of installing subducting as claimed in claim 1, further comprising increasing the cross-sectional area of the subducting for receiving components into the subducting before the step of decreasing the cross-sectional area of the subducting to reduce the volume occupied by the subducting in the duct.

3. A method of installing subducting as claimed in claim 1 or 2, wherein the subducting is formed of a flexible material.

4. A method of installing subducting as claimed in any preceding claim, wherein the step of increasing the cross-sectional area of the subducting comprises mechanically expanding the subducting to increase the area.

5. A method of installing subducting as claimed in claim 1, 2 or 3, wherein the step of increasing the cross-sectional area of the subducting comprises expanding the material forming the subducting.

6. A method of installing subducting as claimed in any preceding claim, further comprising connecting the subducting to a supply of compressed gas, and activating the supply of compressed gas to force gas through the subducting to increase the cross-sectional area of the subducting.

7. A method of installing subducting as claimed in claim 6, wherein the step of activating the supply of compressed gas to force gas through the subducting to increase the cross-sectional area of the subducting occurs whilst inserting the subducting into the duct.

8. A method of installing subducting as claimed in any preceding claim, wherein the step of decreasing the cross-sectional area comprises allowing the subducting to collapse under gravity, or to deflate.

9. A method of installing subducting as claimed in any preceding claim, wherein the step of activating the supply of compressed gas to force gas through the subducting includes turning the subducting inside out as gas is forced along the subducting.

10. A method of installing subducting as claimed in any preceding claim, wherein the step of turning the subducting inside out occurs as the subducting is being inserted into the duct.

11. A system for installing subducting into a duct comprising:
subducting having a variable cross-sectional area; and
means for decreasing the cross-sectional area of the subducting to reduce the volume occupied by the subducting in the duct.

12. A system for installing subducting into a duct as claimed in claim 11, further comprising means for increasing the cross-sectional area of the subducting for receiving components into the subducting prior to decreasing the cross-sectional area of the subducting to reduce the volume occupied by the subducting in the duct.

13. A system for installing subducting according to claim 11 or 12, wherein the subducting is formed of a flexible material.

14. A system for installing subducting according to any of claims 11 to 13, wherein the subducting comprises a plurality of subducts for receiving a plurality of components.

15. A system for installing subducting according to any of claims 10 to 12, the system further comprising a supply of compressed gas connectable to the subducting for forcing gas through the subducting to increase the cross-sectional area of the subducting.

16. A system for installing subducting according to claim 15, wherein the supply of compressed gas is operable to force gas through the subducting to increase the cross-sectional area of the subducting whilst inserting the subducting into the duct.

17. A system for installing subducting according to claim 15 or 16, wherein the supply of compressed gas is connectable to the subducting such that activation of the supply of compressed gas forces gas through the subducting causing the subducting to turn inside out.

18. A system for installing subducting according to claim 17, wherein the subducting is arranged to turn inside out whilst the subducting is being inflated.
